# EUROPÄISCHE PATENTSCHRIFT

(11) **EP 2 336 614 B1**
(45) Veröffentlichungstag und Bekanntmachung des Hinweises auf die Patenterteilung: **07.09.2016**
(21) Anmeldenummer: 10008901.0
(22) Anmeldetag: 27.08.2010
(51) Int. Cl.: F16K 5/06, F16K 27/06

(54) **Kugelhahn**
Ball valve
Robinet à boisseau sphérique

(30) Priorität: 18.12.2009 DE 102009058978; 22.12.2009 US 654516
(43) Veröffentlichungstag der Anmeldung: 22.06.2011
(73) Patentinhaber: HYDAC Accessories GmbH, 66280 Sulzbach/Saar (DE)
(72) Erfinder: Hiss, Helmut, 75228 Ispringen (DE); Strupp, Markus, 66709 Rappweiler-Zwalbach (DE)
(74) Vertreter: Bartels & Partner

(56) Entgegenhaltungen:
- DE-A1- 1 500 041
- DE-A1- 2 312 712
- DE-B- 1 042 322
- FR-A- 1 241 960
- US-A- 3 109 623
- US-A- 3 151 837

## Beschreibung

Die Erfindung betrifft einen Kugelhahn, insbesondere für unter hohem Druck stehende Medien, mit einem Ventilgehäuse, in dem eine um eine Achse im Gehäuse drehbar gelagerte Kugelspindel in einem axialen Abstand von der Drehlagerung einen Kugelkörper als Sperrorgan zwischen einem Eingangsteil und einem Ausgangsteil eines Mediendurchganges des Gehäuses aufweist, wobei eine im Kugelkörper befindliche Durchflussbohrung zum Entsperren des Kugelhahnes durch Drehen der Kugelspindel auf den Mediendurchgang ausrichtbar ist.

Kugelhähne dieser Art sind bekannt und im Handel frei erhältlich, siehe beispielsweise Prospekt D 5.501.19/06.03 der Anmelderin. Derartige Kugelhähne werden zum Absperren von Volumenströmen vorzugsweise in Hydraulikkreisläufen eingesetzt, jedoch auch für gasförmige und/oder aggressive Medien. Derartige Hähne werden hierbei nicht als Drosselventile, sondern als steuerbare Sperrorgane benutzt, die im geöffneten Zustand einen Vollstromdurchgang für ungehindertes Strömen des Mediums bilden.

Aus der DE 1 042 322 ist ein Hahn mit einem kugelförmigen Küken bekannt. Das Küken ist mittels zweier Achszapfen im Hahngehäuse gelagert. Die Abdichtung der Durchflussbohrung im Gehäuse gegenüber dem Küken ist durch in Richtung der Durchflussbohrung verschiebbare Abdichtringe gewährleistet. Das Küken ist in einer in Richtung der Kükenachse im ungeteilten Gehäuse angebrachten zylindrischen Bohrung eingesetzt. Das Küken und die Abdichtringe sind von einem aus zwei starren Halbschalen bestehenden Zylinder umschlossen, dessen Durchmesser größer als der des Kükens ist.

Bei dem verbreiteten Einsatz derartiger Hähne in Systemen mit hohen Systemdrücken müssen die Anschlussverbindungen zwischen Ventilgehäuse und Rohrleitungssystem besonders sicher und zuverlässig gestaltet sein. Bei hohen Druckstufen, etwa in Bereichen von 500 bar, sind daher Anschlussverbindungen durch Schweißen oder formschlüssiges Klemmen üblich. Zwar wird dadurch eine hohe Betriebssicherheit erreicht, es ergeben sich jedoch Schwierigkeiten, wenn ein Austausch des Kugelhahns, beispielsweise am Ende der Standzeit der Verschleißteile, etwa der Kugelspindel, erforderlich ist. Mit anderen Worten gesagt, ist bei den nicht ohne Weiteres lösbaren Anschlussverbindungen ein zerstörungsfreier Ausbau nicht möglich.

Im Hinblick auf diese Problematik stellt sich die Erfindung die Aufgabe, einen Kugelhahn der betrachteten Art zur Verfügung zu stellen, der bei Bedarf einen Ausbau der Verschleißteile aus dem Ventilgehäuse ohne ein Trennen von Anschlussverbindungen am Ventilgehäuse ermöglicht.

Erfindungsgemäß ist diese Aufgabe durch einen Kugelhahn gelöst, der die Merkmale des Patentanspruches 1 in seiner Gesamtheit aufweist.

Dadurch, dass gemäß dem kennzeichnenden Teil des Anspruches 1 die Kugelspindel an zwei Endabschnitten, die gleich ausgebildet sind und sich beidseits an den Kugelkörper anschließen, gelagert ist, wobei die Lagerung an zumindest einem Endabschnitt durch einen integrierte innere und äußere Gleitlagerbuchsen aufweisenden Lagerungsdeckel gebildet ist, der am Gehäuse lösbar anbringbar ist, ist ein zerstörungsfreier Ausbau der Kugelspindel und der zugehörigen Verschleißelemente in der Weise möglich, dass der zumindest eine Lagerungsdeckel an einem Endabschnitt der Kugelspindel abgenommen wird. Dadurch lässt sich mit bezüglich der Spindelachse axialer Bewegung die Kugelspindel aus dem Gehäuse ausfahren, wobei der zweite Endabschnitt aus seiner Gleitlagerung herausgezogen wird. Ein Lösen der Anschlussverbindungen erübrigt sich somit.

In besonders vorteilhafter Weise kann die Anordnung so getroffen sein, dass die Lagerung an beiden Endabschnitten durch Lagerungsdeckel, die beide am Gehäuse lösbar anbringbar sind, gebildet ist, wobei jeder Lagerungsdeckel in Form einer Lagerhülse ausgebildet ist, die gleich ausgebildet sind und jeweils von der Außenseite des Gehäuses her in einen Spindeldurchgang des Gehäuses einbaubar, vorzugsweise einschraubbar sind. Durch Ausbau beider Lagerungsdeckel sind sowohl die Gleitlagerelemente beider Lagerungsdeckel als Verschleißteile auswechselbar, als auch der Mediendurchgang im Gehäuse vom Spindeldurchgang her bequem zugänglich, sodass hier gegebenenfalls auch im Mediendurchgang befindliche Verschleißteile bequem ausgewechselt werden können.

Bei besonders vorteilhaften Ausführungsbeispielen ist der Spindeldurchgang des Gehäuses derart gestuft, dass sein Durchmesser in dem an den Kugelkörper der im Gehäuse befindlichen Kugelspindel angrenzenden Bereich geringfügig größer als der Außendurchmesser des Kugelkörpers und in dem der Außenseite des Gehäuses näher liegenden Bereich demgegenüber größer ist. Bei solcher Gestaltung des Spindeldurchganges gestaltet sich der Einbau einschraubbarer Lagerhülsen besonders einfach und sicher, weil die dem Spindeldurchgang angepassten und daher an der Außenseite ebenfalls gestuften Lagerhülsen bis zur Anlage an den Stufen eingeschraubt werden können, wobei die Stufen die genaue axiale Positionierung der Lagerhülsen bewirken.

In besonders vorteilhafter Weise kann die Anordnung so getroffen sein, dass an der Innenseite der Lagerhülsen gestufte Lagerpasssitze für Gleitlagerbuchsen gebildet sind, die sich axial voneinander im Abstand befinden und zwischen denen ein O-Ring angeordnet ist. Bei einem gegebenenfalls erforderlichen Austausch von Verschleißteilen können somit die Gleitlagerelemente gesondert ausgetauscht werden, während die Lagerhülsen selbst weiter benutzbar sind.

In besonders vorteilhafter Weise kann im Mediendurchgang des Gehäuses in jedem an den Kugelkörper angrenzenden Abschnitt ein eine Dichtschale in Zusammenwirkung mit dem Kugelkörper bildender Hülsenkörper vorgesehen sein, der im Durchgang durch eine Federanordnung gegen den Kugelkörper hin vorgespannt ist. Eine derartige Bauweise gewährleistet nicht nur eine einwandfreie Abdichtung aufgrund federnder Anlage der Hülsenkörper am Kugelkörper der Kugelspindel, sondern die Hülsenkörper können als Verschleißteile auch vom Spindeldurchgang her gesondert ausgetauscht werden, wenn der Spindelkörper nach dem Abnehmen der Lagerungsdeckel aus dem Spindeldurchgang ausgebaut ist.

Für ein optimales Betriebsverhalten können für Kugelspindel und Dichtschalen eine Werkstoffpaarung aus einer Legierung auf Kobaltbasis bzw. einer Aluminium-Kupfer-Legierung vorgesehen und die Gleitlagerbuchsen aus einer Kupfer-Aluminium-Legierung gebildet sein.

Bei besonders vorteilhaften Ausführungsbeispielen kann an beiden Enden des Mediendurchganges an der jeweiligen Außenseite des Gehäuses ein durch Schrauben befestigter Flansch mit einem integrierten Anschlussstück zur Bildung der Verbindungen mit einem Fluidsystem vorgesehen sein.

In besonders vorteilhafter Weise kann die Anordnung hierbei so getroffen sein, dass die gleich ausgebildeten Flansche einen in den Mediendurchgang ragenden Stutzen besitzen, dessen Ende eine Abstützung für einen gewellten Federring bilden, der den jeweiligen Hülsenkörper zur Abdichtung gegen den Kugelkörper der Kugelspindel vorspannt.

Nachstehend ist die Erfindung anhand von in der Zeichnung dargestellten Ausführungsbeispielen im Einzelnen erläutert. Es zeigen:
- Fig. 1: einen näherungsweise in halber natürlicher Größe gezeichneten Längsschnitt eines Ausführungsbeispieles des erfindungsgemäßen Kugelhahnes;
- Fig. 2: eine noch stärker verkleinert gezeichnete perspektivische Schrägansicht des Ausführungsbeispieles und
- Fig. 3: einen gegenüber Fig. 1 vergrößerten Längsschnitt eines abgewandelten Ausführungsbeispiels.

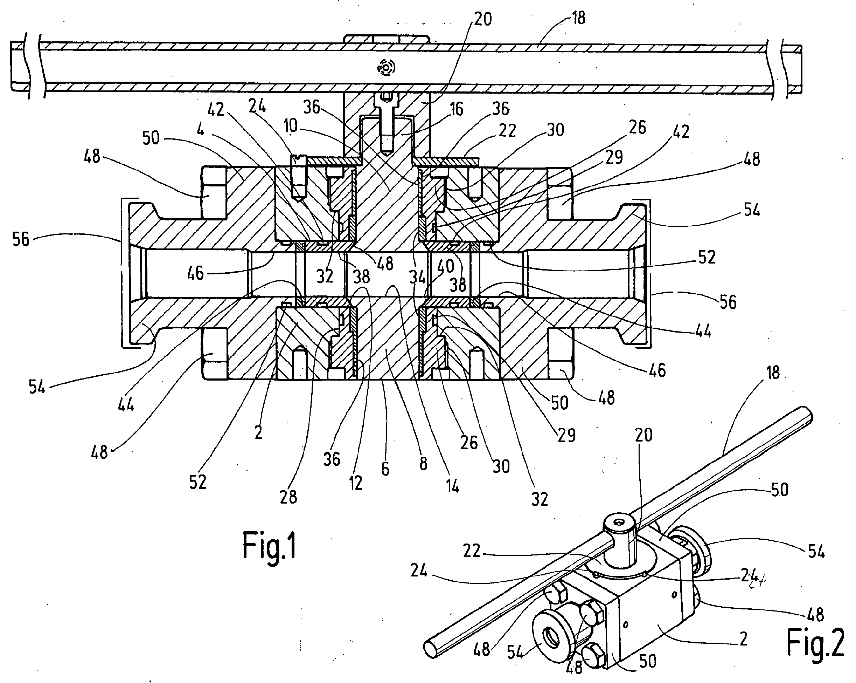

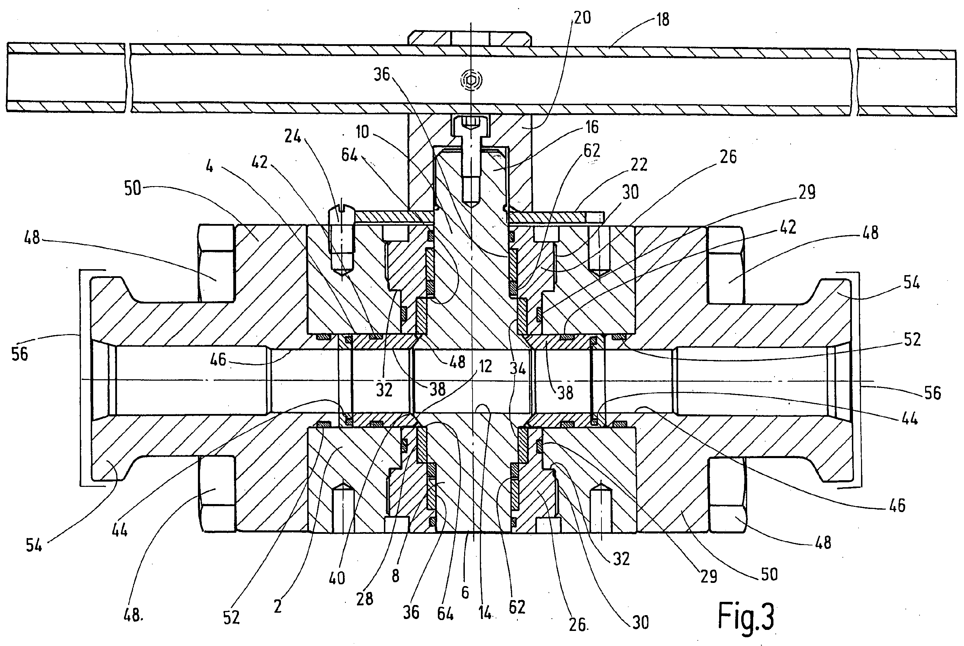

Die in der Zeichnung dargestellten Ausführungsbeispiele des Kugelhahns weisen ein einstückiges Ventilgehäuse 2 in Form eines rechteckigen Quaders auf. Als Strömungsweg für das zu steuernde, betreffende Medium ist ein im Gehäuse 2 zentral gelegener Durchgang in Form einer Bohrung 4 vorgesehen. Als steuerbares Sperrorgan zum Absperren und Freigeben des Strömungsweges ist im Gehäuse 2 mit zur Bohrung 4 senkrechter Achse eine Kugelspindel 6 drehbar gelagert, die zwischen zwei Endabschnitten 8 und 10 einen Kugelkörper 12 bildet, der in der bei Kugelhähnen an sich üblichen Weise den eigentlichen Sperrkörper der Kugelspindel 6 bildet. Zu diesem Zweck weist der Kugelkörper 12 eine Durchflussbohrung 14 auf, die durch Drehen der Kugelspindel 6 auf die den Mediendurchgang bildende Bohrung 4 des Gehäuses 2 ausrichtbar ist. Zum Schalten des Kugelhahnes durch Drehen der Kugelspindel 6 befindet sich an einem Absatz 16 des in Fig. 1 oben liegenden Endabschnittes 10 der Kugelspindel 6 ein zweiarmiger Schalthebel 18, der über ein Kupplungsstück 20 mit dem Fortsatz 16 verbunden ist. Mit dem Kupplungsstück 20 ist eine Begrenzungsscheibe 22 verbunden, die an ihrem Umfang mit Anschlagstiften 24 zusammenwirkt und die Drehbeweglichkeit der Kugelspindel 6 auf eine Drehung von 90° Grad begrenzt, um die Kugelspindel aus der in Fig. 1 und 3 gezeigten Offenstellung des Kugelhahnes in die um 90° Grad hierzu verdrehte Sperrstellung zu drehen.

Die Kugelspindel 6 ist an ihren beiden, jeweils gleich ausgebildeten Endabschnitten 8 und 10 drehbar gelagert. Die Lagerung ist an beiden Endabschnitten 8, 10 jeweils durch einen Lagerungsdeckel gebildet, die in Form von Lagerungshülsen 26 gestaltet sind. Diese sind als sogenannte Gleichteile jeweils gleich ausgebildet und von der einen und der anderen Seite des Gehäuses 2 her in einen Spindeldurchgang 28 eingebaut. Dieser ist derart gestuft, dass sein Durchmesser in dem inneren Endabschnitt, der dem Kugelkörper 12 der Kugelspindel 6 benachbart ist, geringfügig größer ist als der Außendurchmesser des Kugelkörpers 12 und in dem der Außenseite des Gehäuses 2 näherliegenden Bereich demgegenüber größer ist. Bei den gezeigten Beispielen, wo die Lagerungshülsen 26 in das Gehäuse 2 durch Verschrauben eingebaut sind, weist der Spindeldurchgang 28 in dem erweiterten, äußere Bereich ein Innengewinde 30 auf, in das die betreffende Lagerhülse 26 mit Außengewinde einschraubbar ist. Wegen der gestuften Form des Spindeldurchganges 28 ist die in passender Weise gestufte Lagerungshülse 26, wenn sie in den Spindeldurchgang 28 eingeschraubt ist, an der im Durchgang befindlichen Stufe 32 in Anlage und somit im eingeschraubten Zustand axial positioniert. Die Innenseite der Lagerhülsen 26 ist ebenfalls gestuft, um Lagerpasssitze für innere Gleitlagerbuchsen 34 und äußere Gleitlagerbuchsen 36 zu bilden, zwischen denen sich ein geringer Zwischenraum befindet, in dem ein O-Ring (in der Fig. 3 mit 62 beziffert) zur Abdichtung gegenüber der Kugelspindel 6 sitzt. Die Gleitlagerbuchsen 34 und 36 sind aus einer Kupfer-Aluminiumlegierung gebildet, was bei einer Kugelspindel 6 aus einer Legierung auf Kobaltbasis, beispielsweise Stellite^{®} 6, eine günstige Werkstoffpaarung darstellt.

In der den Mediendurchgang bildenden Bohrung 4 befindet sich an jedem an den Kugelkörper 12 angrenzenden Abschnitt eine hülsenartige Dichtschale in Form eines Hülsenkörpers 38 mit an die Außenwölbung des Kugelkörpers 12 angepasstem Dichtrand 40 und einem auf halber Hülsenlänge befindlichen O-Ring 42 zur Abdichtung gegen die Gehäusebohrung 4. Die Hülsenkörper 38 sind gegen die Kugelkörper 12 jeweils federnd vorgespannt. Ein hierfür vorgesehener, gewellter Federring 44 stützt sich an einem Rohrstutzen 46 ab, der sich jeweils von einem durch Schrauben 48 am Gehäuse 2 befestigten Flansch 50 in die Gehäusebohrung 4 erstreckt, gegen die er mit einem O-Ring 52 abgedichtet ist. Die gleich ausgebildeten Flansche 50 weisen jeweils ein Anschlussstück 54 zur Bildung der Verbindung mit einem nicht dargestellten Fluidsystem auf. Für Lagerung und Versand sind die Anschlussstücke 54 durch eine aufgeklipste Schutzhaube 56 abdeckbar.

Bei einem gegebenenfalls erforderlichen Austausch der Kugelspindel 6 und weiterer Verschleißteile, wie der Lagerbuchsen 34 und 36, kann dies vorgenommen werden, ohne Anschlussverbindungen an den Anschlussstücken 54 zu trennen oder die Flansche 50 durch Lösen der Schrauben 48 abzunehmen. Um die Kugelspindel 6 auszubauen ist es ausreichend, eine der als Lagerdeckel dienenden Lagerungshülsen 26 aus dem Gehäuse 2 herauszuschrauben, um die Kugelspindel 6 aus dem Gehäuse 2 herauszuziehen, wobei die Hülsenkörper 38 gegen die Federwirkung durch Zusammenwirkung mit den schrägen Dichträndern 40 verschoben werden. Wenn die Lagerungshülsen 26 an beiden Lagerungsendabschnitten 8 und 10 ausgebaut werden, können sämtliche Lagerbuchsen 34 und 36 als Verschleißteile ausgewechselt werden. Bei beidseits abgenommen Lagerhülsen 26 steht auch innerhalb des Spindeldurchganges 28 ausreichend Freiraum zur Verfügung, um die Hülsenkörper 38 als Verschleißteile vom Innenraum des Spindeldurchganges 28 her auszuwechseln. Zu diesen Vorteilen kommt der Vorteil hinzu, dass der Kugelhahn rationell und kostengünstig herstellbar ist, weil er aus identisch gestalteten, sogenannten Gleichteilen aufgebaut ist, nämlich zwei gleichen Flanschen 50, gleichen Lagerungsdeckeln in Form der Lagerungshülsen 26, gleichen Lagerbuchsen 34 und 36 sowie gleichen, mit je gleich ausgebildeter Federanordnung vorgespannten Hülsenkörpern 38.

Während bei dem Beispiel von Fig. 1 die Kugelspindel 6 in den beiden sich an den Kugelkörper 12 anschließenden Lagerungsabschnitten 8, 10 absatzlos kreiszylindrisch ist, unterscheidet sich das Beispiel von Fig. 3 demgegenüber dadurch, dass die Kugelspindel 6 am Übergang zwischen den Lagerbuchsen 34 und 36 derart abgesetzt ist, dass eine Ringschulter 64 gebildet ist, an der die Kugelspindel 6 jeweils in einen Lagerungsabschnitt geringeren Durchmessers übergeht.

## Patentansprüche

1. Kugelhahn, insbesondere für unter hohem Druck stehende Medien, mit einem Ventilgehäuse (1), in dem eine um eine Achse im Gehäuse (1) drehbar gelagerte Kugelspindel (6) in einem axialen Abstand von der Drehlagerung einen Kugelkörper (12) als Sperrorgan zwischen einem Eingangsteil und einem Ausgangsteil eines Mediendurchganges (4) des Gehäuses (1) aufweist, wobei eine im Kugelkörper (12) befindliche Durchflussbohrung (14) zum Entsperren des Kugelhahnes durch Drehen der Kugelspindel (6) auf den Mediendurchgarig (4) ausrichtbar ist, **dadurch gekennzeichnet, dass** die Kugelspindel (6) an zwei Endabschnitten (8,10), die gleich ausgebildet sind und sich beidseits an den Kugelkörper (12) anschließen, gelagert ist und dass die Lagerung an zumindest einem Endabschnitt (8,10) durch einen integrierte innere und äußere Gleitlagerbuchsen (34,36) aufweisenden Lagerungsdeckel (26) gebildet ist, der am Gehäuse (1) lösbar anbringbar ist.

2. Kugelhahn nach Anspruch 1, **dadurch gekennzeichnet, dass** die Lagerung an beiden Endabschnitten (8 und 10) durch Lagerungsdeckel, die beide am Gehäuse (1) lösbar anbringbar sind, gebildet ist, wobei jeder Lagerungsdeckel in Form einer Lagerhülse (26) ausgebildet ist, die gleich ausgebildet sind und jeweils von der Außenseite des Gehäuses (1) her in einen Spindeldurchgang (28) des Gehäuses (1) einbaubar, vorzugsweise einschraubbar sind.

3. Kugelhahn nach Anspruch 2, **dadurch gekennzeichnet, dass** der Spindeldurchgang (28) des Gehäuses (1) derart gestuft ist, dass sein Durchmesser in dem an den Kugelkörper (12) der im Gehäuse (1) befindlichen Kugelspindel (6) angrenzenden Bereich geringfügig größer als der Außendurchmesser des Kugelkörpers (12) und in dem der Außenseite des Gehäuses (1) näher liegenden Bereich demgegenüber größer ist.

4. Kugelhahn nach Anspruch 3, **dadurch gekennzeichnet, dass** an der Innenseite der Lagerhülsen (26) gestufte Lagerpasssitze für Gleitlagerbuchsen (34,36) gebildet sind, die sich axial voneinander im Abstand befinden und zwischen denen ein O-Ring (62) angeordnet ist.

5. Kugelhahn nach Anspruch 4, **dadurch gekennzeichnet, dass** die Kugelspindel (6) in ihren Lagerungsabschnitten (8, 10) zwischen den den Lagerbuchsen (34 und 36) zugeordneten Bereichen einen Absatz aufweist, der eine Ringschulter (64) bildet, an der die Kugelspindel (6) in Endabschnitte (8, 10) geringeren Durchmessers übergeht.

6. Kugelhahn nach einem der Ansprüche 1 bis 5, **dadurch gekennzeichnet, dass** im Mediendurchgang (4) des Gehäuses (1) an jedem an den Kugelkörper (12) angrenzenden Abschnitt ein eine Dichtschale in Zusammenwirkung mit dem Kugelkörper (12) bildender Hülsenkörper (38) vorgesehen ist, der im Durchgang (4) durch eine Federanordnung (44) gegen den Kugelkörper (12) hin vorgespannt ist.

7. Kugelhahn nach Anspruch 6, **dadurch gekennzeichnet, dass** für Kugelspindel (6) und Hülsenkörper (38) eine Werkstoffpaarung aus einer Legierung auf Kobaltbasis bzw. einer Aluminium-Kupferlegierung vorgesehen ist.

8. Kugelhahn nach einem der Ansprüche 4 bis 7, **dadurch gekennzeichnet, dass** die Gleitlagerbuchsen (34,36) aus einer Kupfer-Aluminiumlegierung gebildet sind.

9. Kugelhahn nach einem der Ansprüche 1 bis 8, **dadurch gekennzeichnet, dass** an beiden Enden des Mediendurchganges (4) an der jeweiligen Außenseite des Gehäuses (1) ein durch Schrauben (48) befestigter Flansch (50) mit einem integrierten Anschlussstück (54) zur Bildung der Verbindungen mit einem Fluidsystem vorgesehen ist.

10. Kugelhahn nach Anspruch 9, **dadurch gekennzeichnet, dass** die gleich ausgebildeten Flansche (50) einen in den Mediendurchgang (4) ragenden Stutzen (46) besitzen, dessen Ende eine Abstützung für einen gewellten Federring (44) bilden, der den jeweiligen Hülsenkörper (38) zur Abdichtung gegen den Kugelkörper (12) der Kugelspindel (6) vorspannt.

## Claims

1. A ball valve, in particular for media at high pressure, comprising a valve housing (1) in which a ball spindle (6) mounted rotatably about an axis within the housing (1) has a ball body (12) an axial distance away from the rotary bearing as a blocking element between an input part and an output part of a medium passage (4) of the housing (1), a flow-through bore hole (14) located within the ball body (12) for unlocking the ball valve being able to be aligned to the medium passage (4) by turning the ball spindle (6), **characterised in that** the ball spindle (6) is mounted on two end sections (8, 10) which are identical in form and adjoin the ball body (12) on both sides, and that the bearing on at least one end section (8, 10) is formed by a bearing cover (26) that has integrated inner and outer slide bearing bushings (34, 36) and that can be attached detachably to the housing (1).

2. The ball valve according to Claim 1, **characterised in that** the bearing is formed on both end sections (8 and 10) by bearing covers that can both be attached detachably to the housing (1), each bearing cover being made in the form of a bearing sleeve (26) that are formed identically and can each be fitted in, preferably screwed into, a spindle passage (28) of the housing (1) from the outside of the housing (1).

3. The ball valve according to Claim 2, **characterised in that** the spindle passage (28) of the housing (1) is tiered so that its diameter in the region adjacent to the ball body (12) of the ball spindle (6) located within the housing (1) is slightly larger than the outside diameter of the ball body (12) and is comparably larger in the region lying closer to the outside of the housing (1).

4. The ball valve according to Claim 3, **characterised in that** tiered bearing snug fits for slide bearing bushings (34, 36) are formed on the inside of the bearing sleeves (26) which are spaced apart from one another axially and between which an O-ring (62) is positioned.

5. The ball valve according to Claim 4, **characterised in that** in its bearing sections (8, 10) between the regions assigned to the bearing bushings (34 and 36) the ball spindle (6) has an offset that forms an annular collar (64) at which the ball spindle (6) passes into end sections (8, 10) with a smaller diameter.

6. The ball valve according to any of Claims 1 to 5, **characterised in that** there is provided in the medium passage (4) of the housing (1) in each section adjacent to the ball body (12) a sleeve body (38) forming a sealing shell in conjunction with the ball body (12) that is pre-stressed against the ball body (12) in the passage (4) by a spring arrangement (44).

7. The ball valve according to Claim 6, **characterised in that** a material pairing comprising a cobalt-based alloy or an aluminium/copper alloy is provided for the ball spindle (6) and the sleeve body (38).

8. The ball valve according to any of Claims 4 to 7, **characterised in that** the slide bearing bushings (34, 36) are formed from a copper/aluminium alloy.

9. The ball valve according to any of Claims 1 to 8, **characterised in that** a flange fastened by screws (48) with an integrated connection piece (54) is provided on both ends of the medium passage (4) on the respective outside of the housing (1) in order to form the connections to a fluid system.

10. The ball valve according to Claim 9, **characterised in that** the identically formed flanges (50) have a connector (46) projecting into the medium passage (4), the end of which forms a support for an undulating spring ring (44) which pre-stresses the respective sleeve body (38) in order to seal against the ball body (12) of the ball spindle (6).

## Revendications

1. Robinet à boisseau sphérique notamment pour des fluides sous haute pression, comprenant un corps (1) de robinet dans lequel une broche (6) de boisseau montée tournant autour d'un axe du corps (1) a, à distance axiale du montage en rotation, une pièce (12) de boisseau comme organe d'obturation entre une partie d'entrée et une partie de sortie d'un passage (4) pour les fluides du corps (1) dans lequel un alésage (14) de passage se trouvant dans la pièce (12) de boisseau, et pour la désobturatin du robinet à boisseau par rotation de la broche (6) de boisseau, peut être dirigé sur le passage (4) pour des fluides, **caractérisé en ce que** la broche (6) de boisseau est montée sur deux segments (8, 10) d'extrémité qui sont constitués pareillement et qui se raccordent des deux côtés à la pièce (12) de boisseau, et **en ce que** le montage sur au moins un segment (8, 10) d'extrémité, est formé par un couvercle (6) de montage, qui a des manchons (34, 36) intégrés intérieur et extérieur, formant palier lisse, et qui peut être mis de manière amovible sur le corps (1).

2. Robinet à boisseau sphérique suivant la revendication 1, **caractérisé en ce que** le montage sur les deux segments (8 et 10) d'extrémité est formé par des couvercles de montage, qui peuvent être mis de manière amovible sur le corps (1), chaque couvercle de montage étant constitué sous la forme d'une douille (26) formant palier, qui sont constitués pareillement et qui peuvent être introduits, respectivement à partir du côté extérieur du corps (1) dans un passage (28) pour broche du corps (1) en pouvant, de préférence, être vissés.

3. Robinet à boisseau sphérique suivant la revendication 2, **caractérisé en ce que** le passage (28) pour broche du corps (1) est étagé de manière à ce que son diamètre, dans la partie, voisine de la pièce (12) de boisseau de la broche (6) de boisseau se trouvant dans le corps (1) , soit légèrement plus grand que le diamètre extérieur de la pièce (12) de boisseau et soit relativement grand dans la partie se trouvant plus près du côté extérieur du corps (1).

4. Robinet à boisseau sphérique suivant la revendication 3, **caractérisé en ce que**, du côté intérieur des douilles (26) de palier, sont formés des sièges étagés d'adaptation de palier pour des manchons (34, 36) de palier lisse, qui se trouvent à distance axialement l'un de l'autre et entre lesquels est disposé un joint (62) torique.

5. Robinet à boisseau sphérique suivant la revendication 4, **caractérisé en ce que** la broche (6) de boisseau a, dans ses segments (8, 10) de montage entre les parties associées aux manchons (34, 36) de palier, un ressort qui forme un épaulement (64) annulaire, où la broche (6) de boisseau se transforme en des segments (8, 10) d'extrémité de diamètre plus petit.

6. Robinet à boisseau sphérique suivant l'une des revendications 1 à 5, **caractérisé en ce que**, dans le passage (4) pour des fluides du corps (1), est prévue, sur chaque segment voisin de la pièce (12) de boisseau, une pièce (38) formant douille, qui forme une coque d'étanchéité en coopération avec la pièce (12) de boisseau
et qui, dans le passage (4), est précontrainte vers la pièce (12) de boisseau par un système (44) de ressort.

7. Robinet à boisseau sphérique suivant la revendication 6, **caractérisé en ce qu'**il est prévu, pour la broche (6) de boisseau et la pièce (38) formant douille, un appariement de matériau en un alliage à base de cobalt ou en un alliage d'aluminium et de cuivre.

8. Robinet à boisseau sphérique suivant l'une des revendications 1 à 7, **caractérisé en ce que** les manchons (34, 36) de palier lisse sont en un alliage de cuivre et d'aluminium.

9. Robinet à boisseau sphérique suivant l'une des revendications 1 à 8, **caractérisé en ce qu'**il est prévu aux deux extrémités du passage (4) pour des fluides du côté extérieur respectivement du corps (1), une bride (50) pouvant être fixée par des vis (48) et ayant une pièce (54) de raccordement intégrée, pour former les liaisons avec un système pour des fluides.

10. Robinet à boisseau sphérique suivant la revendication 9, **caractérisé en ce que** les brides (50), constituées pareillement, ont un raccord (45) qui pénètre dans le passage (4) pour des fluides et dont les extrémités forment un appui pour une bague (44) à ressort ondulé, qui précontraint la pièce (38) de douille respective en vue de l'étanchéité sur la pièce (12) de boisseau de la broche (6) de boisseau.
